# EUROPÄISCHE PATENTSCHRIFT

(11) **EP 0 732 256 B1**
(45) Veröffentlichungstag und Bekanntmachung des Hinweises auf die Patenterteilung: **08.07.1998**
(21) Anmeldenummer: 96101641.7
(22) Anmeldetag: 06.02.1996
(51) Int. Cl.: B62D 33/067, B62D 33/10

(54) **Kippvorrichtung für ein Fahrerhaus eines Nutzfahrzeuges**
Device for tilting the driver's cab of a load-carrying vehicle
Dispositif pour basculer la cabine de conducteur d'un véhicule utilitaire

(30) Priorität: 16.03.1995 DE 19509490
(43) Veröffentlichungstag der Anmeldung: 18.09.1996
(73) Patentinhaber: MAN Nutzfahrzeuge Aktiengesellschaft, 80976 München (DE); Weber-Hydraulik GmbH, D-74363 Güglingen (DE)
(72) Erfinder: Albertshofer,Günther, Dipl.-Ing. (FH), D-81927 München (DE); Stummer, Josef, Dipl.-Ing., D-80935 München (DE); Übelacker, Andreas, Dipl.-Ing., D-85244 Röhrmoos (DE); Obermeyer, Günther, Dipl.-Ing. (FH), D-74363 Güglingen (DE)

(56) Entgegenhaltungen:
- EP-A- 0 149 810
- EP-A- 0 355 345
- DE-A- 4 240 449
- DE-C- 4 214 219
- US-A- 4 372 411

## Beschreibung

Die Erfindung betrifft eine Kippvorrichtung für ein Fahrerhaus eines Nutzfahrzeuges, gemäß dem Oberbegriff des Anspruches 1.

Es sind Kippvorrichtungen für Fahrerhäuser von Nutzfahrzeugen bekannt, die beim Kippvorgang des Fahrerhauses mechanisch oder hydraulisch durch Einlegen von Sperren, Rollen, Klinken usw. den Freiheitsgrad, der für die Federbewegung des Fahrerhauses während der Fahrtstellung benötigt wird, bei der Kippbewegung mittels Blockiereinrichtungen einschränken oder unterbinden. Diese Blockiervorrichtungen besitzen teilweise aufwendige Gelenkanordnungen und Ansteuerungen, die hohem Verschleiß ausgesetzt sein können, da sehr hohe Kräfte für das Blockieren bzw. Sperren des fahrerhausfesten Teils der Kippvorrichtung bezüglich dessen rahmenfesten Teils benötigt werden. Diese hohen Kräfte können vielfach nur über Roll-, Gleit- oder kombinierte Bewegungen aufgenommen werden, so daß hierdurch unzulässig großer Verschleiß an den Bauteilen der Kippvorrichtung auftreten kann.

Aus der EP-A-0 149 810 ist eine Kippvorrichtung für ein Fahrerhaus eines Nutzfahrzeuges bekannt, die eine beim Kippvorgang des Fahrerhauses wirksame - die das Fahrerhaus in seiner Betriebsstellung abstützenden Federsysteme sperrende - Blockiervorrichtung aufweist. Das Fahrerhaus ist mittels einenendes rahmenfest als auch anderenendes fahrerhausfest gelagerten Schwingen gegenüber dem Fahrzeugrahmen verschwenkbar. Eine bei der Schwenkbewegung des Fahrerhauses eintretende, unzulässige Entlastung der dieses stützenden Federsysteme ist durch das Zusammenwirken eines am Fahrerhaus befestigten Gegenanschlages mit einem an den Schwingen oder am Fahrzeugrahmen angebrachten Anschlag wirksam unterbunden. Um im weiteren Kippverlauf ein schädliches Einfedern der Federsysteme zu vermeiden, ist je Fahrzeugseite eine auf einer am Rahmenlängsträger befestigten Rollenbahn abstützend abrollende, fahrerhausfeste Rolle vorgesehen. Diese Lösung ist jedoch technisch relativ aufwendig darstellbar.

Kippvorrichtungen gemäß des Oberbegriffes des Anspruches 1 sind durch die DE 42 14 219 C2 bekannt. Bei dieser Kippvorrichtung erfolgt während des Vorkippens des Fahrerhauses eine Verriegelung der Federsysteme durch eine Blockiervorrichtung. Diese weist einen am Fahrerhausboden abgestützten Verriegelungszylinder auf, dessen Kolben im wesentlichen vertikal nach unten ausgeschoben wird und dabei mit seiner an ihm befestigten Kolbenstange in die Aufnahme eines hebelartigen Auslegers einer das Fahrerhaus und den Fahrzeugrahmen gelenkig miteinander verbindenden Schwinge formschlüssig einfährt. Damit ist eine hintere fahrerhausfeste Gelenkachse der Schwinge derart gegen Verdrehung gesichert, daß das Fahrerhaus um eine vordere Gelenkachse der Schwinge in gewissen Grenzen ohne gefährdende Belastung der Federsysteme gekippt werden kann. Da der Ausleger der Schwinge rechtwinklig zu dieser im Bereich ihrer hinteren Gelenkachse ausgebildet ist und die Wirklinie des Verriegelungszylinders in der Drehebene der hinteren Gelenkachse liegt, können von dieser Anordnung nur sehr geringe Momente im Bereich dieser hinteren Gelenkachse übertragen werden. Damit ist eine nur unzureichende Versteifung der Kippeinheit von Schwinge und Fahrerhaus gegeben, so daß bei dieser Vorrichtung weiterhin eine hohe Verschleißgefährdung der Federsysteme als auch der Kipp- und der Blockiervorrichtung zu befürchten ist und somit eine Beeinträchtigung der Funktionssicherheit nicht ausgeschlossen werden kann.

Der Erfindung liegt daher die Aufgabe zugrunde, eine Kippvorrichtung der eingangs genannten Art zu schaffen, die auch bei betriebsbedingt großem Federweg der Federsysteme geringen Bauraum beansprucht und sowohl weitestgehende Verschleißfreiheit für alle beim Kippvorgang des Fahrerhauses betroffenen Bauteile, als auch eine optimierte Funktionssicherheit gewährleistet.

Die Aufgabe wird erfindungsgemäß durch die Merkmale des Anspruches 1 gelöst.

Durch das erfindungsgemäße Vorsehen eines Sperrzylinders je Schwinge ist mittels dessen Kolbenstange ein an der Schwinge befindlicher Anschlag kraftschlüssig mit einem fahrerhausfesten Gegenanschlag zur Anlage bringbar. Dadurch kann die aus Anschlag und Gegenanschlag gebildete Blockiervorrichtung aktiviert werden, womit eine wirksame, funktionssichere und für alle Bauteile der Kippvorrichtung nahezu verschleißfreie Sperrung der Federsysteme erzielbar ist.

Des weiteren ist durch die erfindungsgemäße Aktivierung der Blockiervorichtung eine genau definierbare, quasistarre und kraftschlüssige Verbindung zwischen Fahrerhaus und der dieses gelenkig mit dem Fahrzeugrahmen verbindenden Schwingen gegeben, wodurch Fahrerhaus und Schwingen eine starre Verschwenkungseinheit gegenüber den vorderen, rahmenfesten Lagern der Schwingen bilden. Die Drehachsen der vorderen Lager stellen gleichzeitig die gemeinsame Kippachse des kompletten Fahrerhauses dar. Das Bilden einer starren Verschwenkungseinheit hat den Vorteil, daß einerseits das Fahrerhaus um eine feste, genau definierte Drechachse kippbar ist, wobei das fahrerhausseitige Lager der Schwinge gesperrt und das rahmenseitig in einem rahmenfesten Lagerbock untergebrachte Lager der Schwinge frei drehbar bleibt, und andererseits die die kippachsnahen, das Fahrerhaus tragenden Federsysteme sperrende Blockiervorrichtung so ausgelegt ist, daß das Fahrerhaus zunächst bei Kippbeginn translatorisch aus seinen diversen Dichtungs- und Dämmelementen gehoben werden kann. Das zunächst translatorisch erfolgende Anheben des Fahrerhauses gestattet, geringere Bauräume im Bereich der vorderen Anbauteile, wie Stoßfänger, Blenden usw. vorzusehen. Zudem können infolge der quasistarren Verbindung zwischen den Schwingen und dem Fahrerhaus kleinere kippbedingte Relativbewegungen zwischen diesen toleriert werden, ohne die kraftschlüssige Verbindung von Fahrerhaus und Schwingen aufzugeben. Damit ist sichergestellt, daß die das Fahrerhaus in seiner Betriebsstellung abstützenden, kippachsnahen Federsysteme zuverlässig vor kippbedingter Überbeanspruchung geschützt sind. Darüber hinaus können aufgrund der aus Fahrerhaus und Schwingen gebildeten, quasistarren Verschwenkungseinheit bauaufwendige und verschleißträchtige Gleit- bzw. Abrollkulissen, wie sie beispielsweise bei anderen Vorrichtungen der gattungsgemäßen Art zur Abstützung des in der rotatorischen Phase des Kippvorganges befindlichen Fahrerhauses erforderlich sind, ersatzlos entfallen.

Gemäß einer vorteilhaften Ausgestaltung der Erfindung kann die quasistarre, kraftschlüssige und genau definierte Verbindung zwischen Fahrerhaus und Schwingen während des gesamten Kippvorganges erhalten bleiben, damit die beim Kippvorgang auftretenden Querverwindungen des Fahrerhauses weitgehend unterbunden und somit beispielsweise Überbeanspruchungen in den betroffenen Bauteilen wirksam vermieden werden.

Gemäß der erfindungsgemäßen Kippvorrichtung kann der fest an der Schwinge angebrachte Anschlag eine Platte sein, die von einem bügelförmig ausgebildeten, fahrerhausfesten Gegenanschlag mit Spiel umgriffen ist. Dieses Spiel zwischen Anschlag und Gegenanschlag kann je nach betriebsbedingt erforderlichem Federweg der Federsysteme des Fahrerhauses in vorteihafter Weise entsprechend groß ausgebildet sein, da Anschlag und Gegenanschlag erst beim Kippvorgang selbst mittels Sperrzylinder zur Anlage gebracht werden müssen. Der Gegenanschlag kann an einer vom Fahrerhaus nach unten wegstrebenden Fahrerhauskonsole oder dergleichen oder am Fahrerhaus selbst befestigt sein.

In vorteilhafter Weise können als Sperrzylinder hydraulische Sperrzylindervorgesehen sein, deren Hydraulikkreislauf an den des wengistens einen Kippzylinders angeschlossen ist. Anstelle hydraulischer Sperrzylinder können alternativ auch pneumatische, elektrische oder mechanische Sperrzylinder vorgesehen sein.

Je nach Gewicht des Fahrerhauses kann die Kippvorichtung mehrere Kippzylinder zur Verschwenkung des Fahrerhauses aufweisen. Bei Vorsehen eines einzelnen an einer Fahrzeugseite angeordneten Kippzylinders können in vorteilhafter Weise die bei der Kippbewegung des Fahrerhauses zu erwartende Verwindung des Fahrerhauses durch die vorgesehenen Sperrzylinder wirksam unterbunden und damit die linke und die rechte Fahrerhaushälfte gleichzeitig angehoben und gekippt werden. Die auf beiden Seiten des Fahrerhauses angeordneten Sperrzylinder übernehmen die Stabilisierung beider Fahrerhausseiten bei der Kippbewegung und bewirken somit eine Versteifung des Fahrerhauses insgesamt. Ein bislang für die Versteifung des Fahrerhauses zuständiger Stabilisator in Fahrzeugquerrichtung kann somit ersatzlos entfallen.

Gemäß einer weiteren vorteihaften Ausgestaltung der Erfindung sind die Sperrzylinder mit dem Fahrerhaus beispielsweise über fahrerhausfeste Fahrerhauslängsträger fest verbunden. Die Sperrzylinder können dabei vorzugsweise unterhalb den Fahrerhauslängsträgern angebracht sein, derart, daß sie die Kräfte relativ direkt auf die Fahrerhauslängsträger übertragen. Die Sperrzylinder können des weiteren so angeordnet sein, daß sie mit ihren nach unten gerichteten Kolbenstangen vorwiegend Kräfte in ihrer Längsrichtung übertragen. Diese Anordnung der Sperrzylinder ist insofern vorteilhaft, da die Aktivierung der Blockiervorrichtung und damit die Sperrung der Federsysteme sehr hohe Kräfte verlangt. Infolge einer solchen Anordnung der Sperrzylinder können insbesondere Verschleiß an deren Kolbenstangen und Dichtungen wirksam vermieden werden. Des weiteren können die Sperrzylinder so angeordnet sein, daß sie einerseits im eingefahrenen Zustand genügend Freiraum für die Federbewegung der Schwinge und des Fahrerhauses zur Verfügung stellen und andererseits im ausgefahrenen Zustand beim Blockieren bzw. Sperren - sowohl der Federsysteme als auch der Relativbewegung zwischen Schwingen und Fahrerhaus - keine verschleißträchtigen Roll- oder Gleitbewegungen ausführen müssen. In weiterer vorteilhafter Ausgestaltung kann die Anordnung der Sperrzylinder derart realisiert sein, daß diese während des gesamten Kippvorganges in kraftschlüssiger Verbindung mit Anschlag und Gegenanschlag verharren. Dies hat neben erhöhter Funktionssicherheit und Verschleißfreiheit auch den Vorteil vereinfachter Ansteuerung der Sperrzylinder. Alternativ können die Sperrzylinder auch an anderen fahrerhausfesten Bauteilen oder aber an den Schwingen selbst oder sich mit diesen mitbewegenden Bauteilen befestigt sein.

Nach einer weiteren Ausgestaltung der Erfindung können die Sperrzylinder sowohl vor als auch während des Ausfahrens des Kippzylinders betätigbar sein. Die beiden Sperrzylinder können dabei querschnittskleiner als der Kippzylinder ausgelegt sein, so daß bei einem mit dem Kippzylinder gemeinsam gebildeten Hydraulikkreislauf diese Sperrzylinder schneller in Wirkstellung gebracht werden können als der Kippzylinder. Dies hat den Vorteil, daß schon zu Beginn der Kippbewegung eine kraftschlüssige, starre Verbindung zwischen Schwingen und Fahrerhaus und damit zusätzlich ein wirksames Blockieren der Federelemente zuverlässig erzielbar ist, was größtmögliche Verschleißfreiheit an Federelement, Fahrerhaus und Kippvorrichtung garantiert. Das Ausfahren der Sperrzylinder vor Ausfahren des Kippzylinders hat zudem den Vorteil, daß hierdurch der Kippzylinder zu Beginn in seiner Hubarbeit beim zunächst translatorischen Anheben des Fahrerhauses durch die Sperrzylinder unterstützt werden kann.

Nach einer weiteren vorteilhaften Ausgestaltung der Erfindung können die Sperrzylinder so angesteuert sein, daß sie erst im eingefahrenen Zustand des Kippzylinders zurückgefahren und somit die Federsysteme letzlich erst nach Abschluß des eigentlichen Kippvorganges entsperrt werden. Dabei kann beispielsweise der Kolbenstange des wenigstens einen Kippzylinders ein Stellanschlag zugeordnet sein, mit dem ein auf die Sperrzylinder wirkendes, hydraulisches Steuerventil betätigbar ist. Dieses Steuerventil kann beispielsweise ein am Kippzylinder angebrachtes oder ein in diesen integriertes 3/2-Wegeventil sein, das erst in eingefahrener Stellung des Kippzylinders betätigt ist und so den auf die Sperrzylinder wirkenden Hydraulikstrom steuert. Vorteilhafterweise kann der Stellanschlag an der Kolbenstange des einen Kippzylinders angeordnet und als Bestandteil einer der Kippvorrichtung zugeordneten Fangvorrichtung, beispielsweise in Gestalt eines gleichzeitig als Anschlag dienenden Fanghakens gegeben sein.

Den Sperrzylindern können integrierte, entsperrbare Rückschlagventile zugeordnet sein, mittels diesen ein Einfahren der Sperrzylinder während des gesamten Kippvorganges unter allen Umständen verhindert wird. Auch Leitungsbrüche zwischen den Hydraulikaggregaten können somit kein ungewolltes Einfahren der Sperrzylinder bewirken, so daß das Fahrerhaus gegen unbeabsichtigtes Herabsacken während des Kippvorganges gesichert bleibt. Erst wenn das am Kippzylinder angebrachte oder in diesen integrierte Steuerventil durch das vollständige Einfahren des Kippzylinders betätigt ist, können die entsperrbaren Rückschlagventile entsperrt werden und die Sperrzylinder einfahren. Das zuvor rotatorisch um die vorderen, rahmenfesten Lager gekippte Fahrerhaus wird beim Einfahren der Sperrzylinder translatorisch abgesenkt und letzlich wieder in seine endgültige Betriebsstellung gebracht.

Nachfolgend ist die Erfindung anhand von in der Zeichnung schematisch dargestellten Ausführungsbeispielen näher erläutert. In der Zeichnung zeigen:
- Fig. 1: eine erste Darstellung der erfindungsgemäßen Kippvorrichtung in gekipptem Zustand in Seitenansicht,
- Fig. 2: gemäß Fig. 1 eine erfindungsgemäße Kippvorrichtung in eingefahrenem Zustand in Seitenansicht,
- Fig. 3: einen vergrößerten Ausschnitt aus Fig. 2 gemäß Schnitt III-III und
- Fig. 4: eine schematisierte Darstellung des Hydraulikkreislaufes der erfindungsgemäßen Kippvorrichtung.

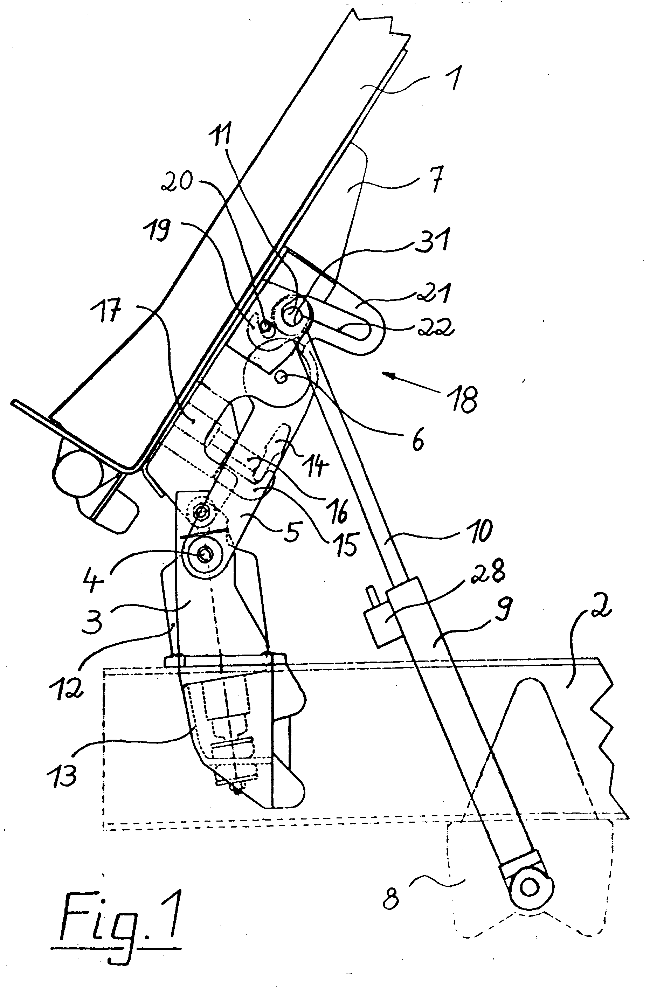

Fig. 1 zeigt eine Kippvorrichtung für ein Fahrerhaus 1 eines Nutzfahrzeuges im gekippten Zustand in Seitenansicht. Die Kippvorrichtung umfaßt dabei jeweils einen an jedem Rahmenlängsträger des Fahrzeugrahmens 2 befestigten, vorderen Lagerbock 3, an dem jeweils über ein vorderes erstes Lager 4 eine Schwinge 5 gelagert ist, die mit ihrem anderen Ende an einem zweiten hinteren Lager 6 an einer am Fahrerhaus 1 fest angebrachten, nach unten weisenden Fahrerhauskonsole 7 gelagert ist. Die Drehachse des Lagers 4 bildet dabei gleichzeitig die Kippachse des Fahrerhauses 1 beim Kippvorgang.

Des weiteren ist an einem unterhalb des Fahrzeugrahmens 2 angeordneten unteren, hinteren Lagerbock 8 ein Kippzylinder 9 gelagert, dessen Kolbenstange 10 endseitig eine an der Fahrerhauskonsole 7 angeordnete Rolle 11 aufweist, mittels dieser das Fahrerhaus 1 angelenkt ist. Die Rolle 11, die auch durch einen Zapfen oder dergleichen gebildet sein kann, ist an einer fahrerhausfesten Fangvorrichtung 18 angeordnet. Die Rolle 11 kann auch gemäß einer hier nicht gezeigten Version aus einem fahrerhausfesten Lager bestehend sein, das fest an der Fahrerhauskonsole 7 oder einem anderen fahrerhausfesten Bauteil befestigt sein kann. Dabei kann dieses Lager, das koaxial zu dem Lager 6 angeordnet ist, zusammen mit letzterem eine gemeinsame Drehachse besitzen.

Das Fahrerhaus 1 ist frontseitig über seine Fahrerhauskonsole 7 im Bereich des vorderen Lagerbocks 3 gegenüber dem Fahrzeugrahmen 2 über ein kippachsennahes Federsystem 12 abgestützt. Dieses Federsystem 12 ist an dem vorderen Lagerbock 3 unterhalb des Fahrzeugrahmens 2 in einer zusätzlichen Stützkonsole 13 aufgenommen. Der vordere Lagerbock 3 und die Stützkonsole 13 können auch ein einziges Bauteil bilden.

An der Schwinge 5 ist eine als Anschlag ausgebildete Platte 14 befestigt, die von einem an der Fahrerhauskonsole 7 befestigten, bügelförmig ausgebildeten Gegenanschlag 15 umgriffen und von einer gegenüberliegend angeordneten Kolbenstange 16 eines an der Fahrerhauskonsole 7 befestigten Sperrzylinders 17 zur Anlage bringbar ist. Der Anschlag 14 und der Gegenanschlag 15 bilden zusammen die Blockiervorrichtung 14, 15, die letzlich Schwinge 5 mit dem Fahrerhaus 1 verriegelt und diese zu einer verwindungssteifen Kippeinheit verbindet, die ausschließlich um die Drehachse des vorderen Lagers 4 kippbar ist.

Da die Verriegelung von Schwinge 5 und Fahrerhaus 1 sehr hohe Kräfte verlangt, ist es vorteilhaft, als Sperrzylinder 17 einen Hydraulikzylinder vorzusehen und diesen so anzuordnen, daß er ausschließlich Kräfte in seiner Längsrichtung überträgt, wodurch der Verschleiß an Kolbenstange 16, Kolben und Dichtungen des Sperrzylinders 17 vermieden wird. Der Sperrzylinder 17 ist dabei so angeordnet, daß er unter den mit dem Fahrerhaus 1 fest verbundenen Fahrerhauslängsträgern angebracht wird, um die Kräfte relativ direkt auf beide Rahmenlängsträger des Fahrzeugrahmens 2 zu übertragen. Die fahrerhausseitige Anbringung des Sperrzylinders 17, beispielsweise an den Fahrerhauslängsträgern des Fahrerhauses 1 vorzusehen, ist deshalb vorteilhaft, da der Sperrzylinder 17 während der gesamten Kippbewegung des Fahrerhauses 1 im ausgefahrenen Zustand verbleibt und dabei die Kippbewegung mitvollziehen muß. Der hydraulische Sperrzylinder 17 ist dabei so angebracht, daß er einerseits im eingefahrenen Zustand genügend Freiraum für die Federbewegung der Schwinge 5 und des Fahrerhauses 1 zur Verfügung stellt und andererseits beim Sperren der Federsysteme 12 keine verschleißträchtigen Roll- oder Gleitbewegungen ausführen muß.

Die Fangvorrichtung 18 für die zusätzliche Positionsfixierung des im gekippten Zustand befindlichen Fahrerhauses 1, die an letzterem, nach unten wegstrebend, befestigt ist, weist eine fahrerhausfeste Kulisse 21 auf, in der eine Kulissenbahn 22 für die Aufnahme und Führung der endseitig an der ausfahrbaren Kolbenstange 10 des Kippzylinders 9 angeordneten Rolle 11 vorgesehen ist. Die Kulissenbahn 22 weist in ihrem oberen Endbereich eine Ausnehmung 31 auf, in die im Verlauf des Kippvorganges die mittels Kolbenstange 10 bewegte Rolle 11 einfährt und einrastet. Damit ist das Fahrerhaus 1 über den gesamten, weiteren Kippverlauf fest mit der Kolbenstange 10 verbunden und gegen ein ungewolltes Überkippen gesichert. Zur weiteren Absicherung des gekippten Fahrerhauses 1 ist an der Kulisse 21 ein von dieser abragender Zapfen 20 angeordnet, der bei ausgefahrener Kolbenstange 10 von einem Fanghaken 19 umschlossen ist und so die Kolbenstange 10 über die Kulisse 21 mit dem Fahrerhaus 1 verriegelt. Eine Entriegelung der Fangvorrichtung 18 kann somit erst wieder mit der Freigabe des Zapfens 20 mittels des ihn umschließenden Fanghakens 19 infolge des Zurückfahrens des Kippzylinders 9 und des Herausfahrens der Rolle 11 aus der Ausnehmung 31 erfolgen.

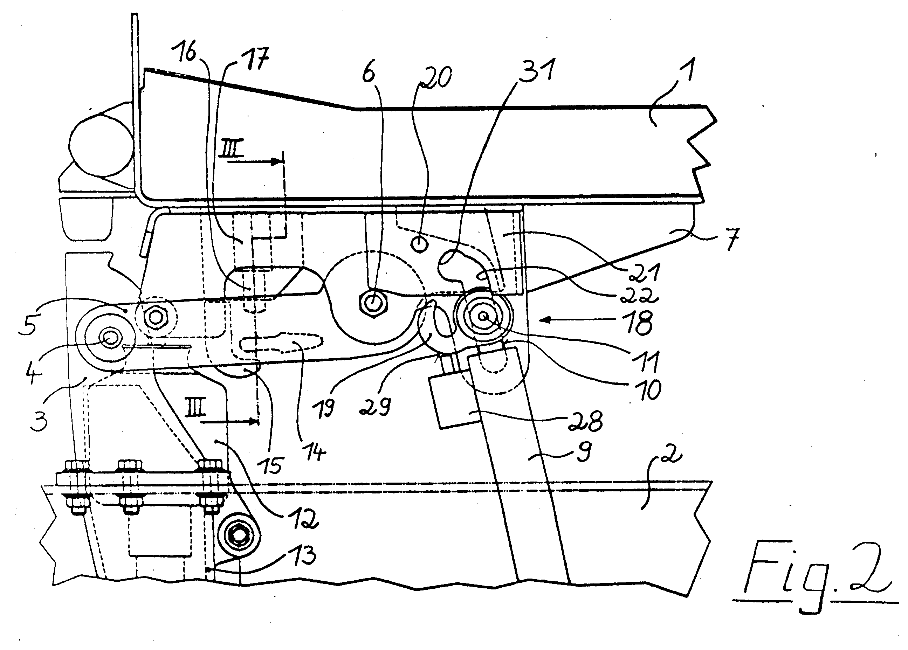

Fig. 2 zeigt eine in Seitenansicht dargestellte Kippvorrichtung im Betriebszustand des Fahrerhauses 1. In diesem Zustand ist der fahrerhausfeste Sperrzylinder 17 eingefahren und der an der Schwinge 5 befestigte Anschlag 14 gegenüber dem ihn bügelförmig umschließenden, fahrerhausfesten Gegenanschlag 15, mit einem, einen ausreichenden Federweg der Federsysteme gewährenden Spieles zueinander beabstandet. Ebenso ist auch der Kippzylinder 9 eingefahren und steht ohne Kraftschluß über die Fangvorrichtung 18 mit dem Fahrerhaus 1 verschiebbar in Verbindung. Des weiteren ist an dem Kippzylinder 9 ein hydraulisches Steuerventil 28, das hier durch ein 3/2-Wegeventil realisiert ist, angeordnet. Mittels eines endseitig an der Kolbenstange 10 vorgesehenen Stellanschlages 29, der gemäß der hier gezeigten Version durch die untere Außenkontur des Fanghakens 19 gegeben ist, kann das hydraulische Steuerventil 28 bei Zurückkippen des Fahrerhauses 1 in seine Betriebsstellung infolge des Zurückfahrens der Kolbenstange 10 betätigt werden. Damit kann der Hydraulikstrom innerhalb des Hydraulikkreislaufes so geschaltet werden, daß erst bei vollständigem Einfahren der Kolbenstange 10 die Sperrzylinder 17 ihre Sperrwirkung aufgeben.

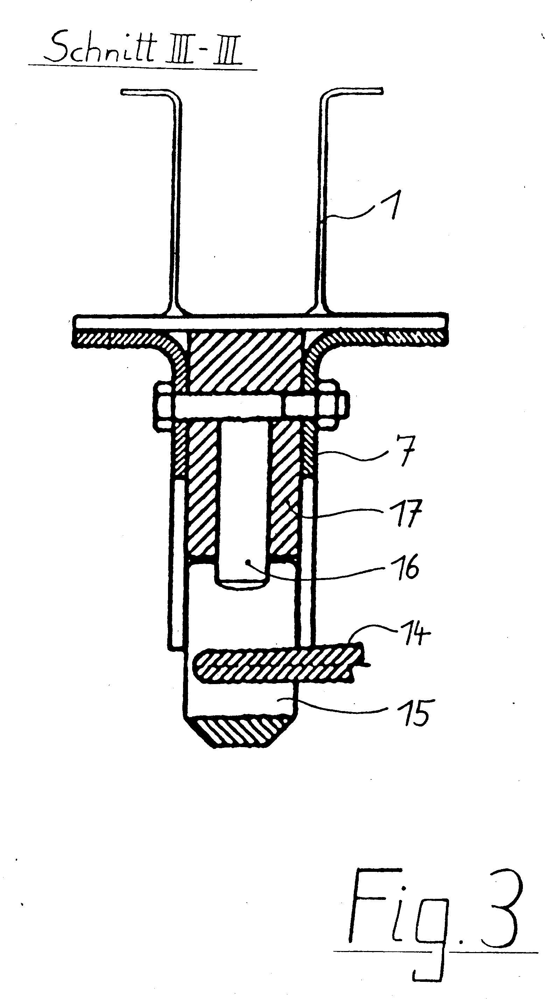

Fig. 3 zeigt einen vergrößerten Ausschnitt aus Fig. 2 im Schnitt III-III. Der mit einer hier nicht gezeigten Schwinge fest verbundene Anschlag 14 ist von einem mit der Fahrerhauskonsole 7 fest verbundenen, bügelförmigen Gegenanschlag 15 mit Spiel unterseitig umgriffen und oberseitig von einer beabstandet angeordneten, eingefahrenen Kolbenstange 16 eines Sperrzylinders 17 konfrontiert. Bei Aktivierung des Sperrzylinders 17 zu Beginn des Kippvorgangeswird der Anschlag 14 gegen den als Bügel ausgebildeten Gegenanschlag 15 gedrückt und kraftschlüssig miteinander verbunden. Dabei wird das Fahrerhaus 1 um das Spiel zwischen Anschlag 14 und Gegenanschlag 15 angehoben und somit eine quasistarre Verbindung zwischen Schwinge 5 und Fahrerhaus 1 erzielt, die in vorteilhafter Weise während des gesamtem Kippvorganges erhalten bleibt.

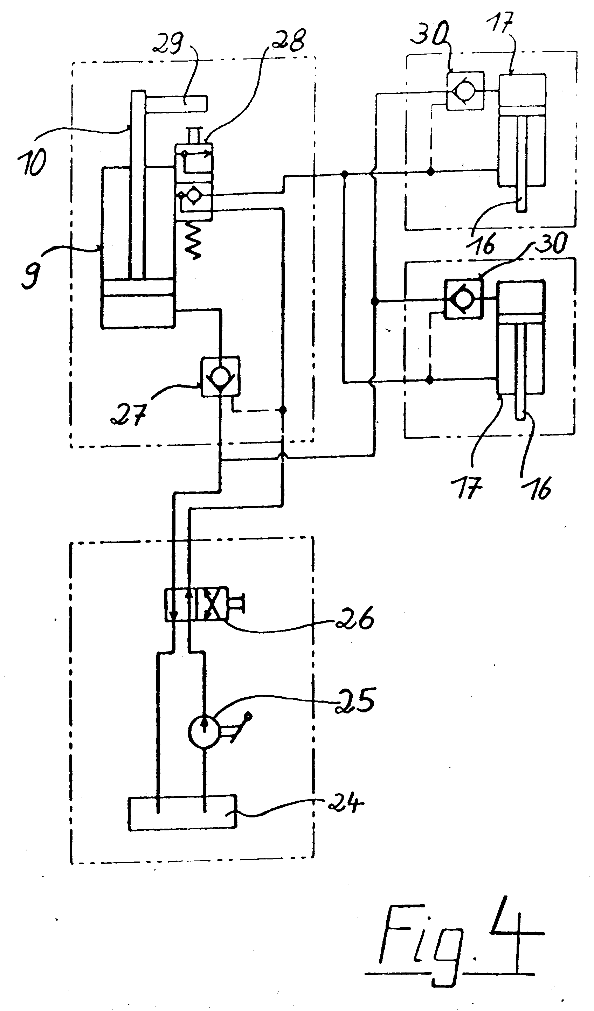

In Fig. 4 ist, im Falle des Vorsehens hydraulischer Sperrzylinder, schematisch der gemeinsame Hydraulikkreislauf von Kippzylinder 9 und den beiden Sperrzylindern 17 dargestellt. Eine an eine Ölversorgung 24 angeschlossene Hydraulikpumpe 25 fördert bei Betätigen eines dieser Hydraulikpumpe 25 nachgeordneten 4/2-Wegeventiles 26 über ein geöffnetes Rückschlagventil 27 Drucköl in einen in eingefahrenem Zustand befindlichen Kippzylinder 9 und gleichzeitig Drucköl über jeweils ein ebenfalls geöffnetes Rückschlagventil 30 in die beiden in eingefahrenem Zustand befindlichen Sperrzylinder 17. Dieser Vorgang ist bei Beginn der Kipphase des Fahrerhauses 1 anzutreffen. Da die Sperrzylinder 17 gemäß der hier gezeigten Version querschnittskleiner als der eine Kippzylinder 9 ausgebildet sind, werden sich die Sperrzylinder 17 schneller als der Kippzylinder 9 in Richtung ihrer Endposition begeben. Auf diese Weise wird der Kippzylinder 9 je nach Querschnittsgröße der Sperrzylinder 17 von diesen mehr oder weniger stark in seiner translatorischen Hubarbeit unterstützt. Unterhalb einer bestimmten Querschnittsgröße der Sperrzylinder 17 kann bei Kippbeginn der Kippzylinder auch unterstützend wirken, so daß die Kolbenstangen 16 der Sperrzylinder 17 in ihre Endlagen gelangen können.

In der hier gezeigten Version sind sämtliche Rückschlagventile 27, 30 in die ihnen zugehörigen Kippzylinder 9 bzw. Sperrzylinder 17 integriert, womit der Betriebssicherheit Rechnung getragen wird. Aufgrund der Rückschlagventile 27, 30 ist während des gesamten Kippvorganges des Fahrerhauses ein ungewolltes Zurücksetzen der Kolbenstangen 10, 16, sowohl des Kippzylinders 9 als auch der Sperrzylinder 17 in ihre jeweilige Ausgangslage wirksam unterbunden. Damit ist sichergestellt, daß während des gesamten Kippvorganges das Fahrerhaus gekippt und gegen die Schwingen versperrt bleibt. Erst bei gewolltem Zurückfahren der Kolbenstange 10 des Kippzylinders 9 in die Ausgangsposition, was durch Betätigung des 4/2-Wegeventiles 26 erfolgt, wird ein an dem Kippzylinder 9 angeordnetes 3/2-Wegeventil 28, dem sowohl eine mechanische Auslösung als auch ein Rückstellelement zugeordnet ist, mittels eines an der Kolbenstange 10 des Kippzylinders 9 angeordneten Stellanschlages 29 betätigt. Der Stellanschlag 29 ist hier durch die untere Außenkontur des der Fangvorrichtung 18 zugehörigen Fanghakens 19 gegeben. Der Stellanschlag 29 löst erst bei im eingefahrenen Zustand befindlichen Kippzylinder 9 eine Betätigung des 3/2-Wegeventiles 28 aus. Dabei wird das 3/2-Wegeventil 28 in seine Durchflußstellung gebracht, was zur Folge hat, daß bei fördernder Pumpe 25 und nach beispielsweise handbetätigter Schaltung des 4/2-Wegeventiles 26 nach Beaufschlagung der Kolbengegenseite des Kippzylinders 9 nun auch die Gegenseiten der Kolben der Sperrzylinder 17 mit Drucköl beaufschlagt werden. Damit fahren, nachdem der Kippzylinder 9 vollends in seinen Ausgangszustand zurückgefahren ist, nun auch die Sperrzylinder 17 in ihre jeweilige Ausgangsposition zurück und geben die Versperrung von Fahrerhaus und Schwinge frei, wodurch das Fahrerhaus in seine endgültige Betriebsstellung zurücksinkt.

## Patentansprüche

1. Kippvorrichtung für ein Fahrerhaus (1) eines Nutzfahrzeuges, mit einer beim Kippvorgang des Fahrerhauses (1) wirksamen, die das Fahrerhaus (1) in seiner Betriebsstellung abstützenden Federsysteme (12) sperrenden Blockiervorrichtung (14, 16, 17), wobei das Fahrerhaus (1) mittels einenendes am Fahrzeugrahmen (2) und anderenendes am Fahrerhaus (1) gelagerten Schwingen (5) gegenüber dem Fahrzeugrahmen (2) verschwenkbar ist, und die Blockiervorrichtung (14, 16, 17) je Schwinge (5) einen Sperrzylinder (17) aufweist, dessen Kolbenstange (16) zur Wirksamsetzung der Blockiervorrichtung (14, 16, 17) in kraftschlüssige Anlage mit einem an der Schwinge (5) befindlichen Anschlag (14) bringbar ist, dadurch gekennzeichnet, daß die Blockiervorrichtung (14, 15, 16, 17) einen fahrerhausfesten Gegenanschlag (15) aufweist, der bei ihrer Wirksamsetzung infolge der ausgefahrenen Kolbenstange (16) des Sperrzylinders (17) - zwecks einer definierten Verriegelung von Fahrerhaus (1) und Schwingen (5) - in definierte, quasistarre und kraftschlüssige Verbindung mit dem an der Schwinge (5) befindlichen Anschlag (14) bringbar ist.

2. Kippvorrichtung nach Anspruch 1, dadurch gekennzeichnet, daß die Blockiervorrichtung (14, 15, 16, 17) wahrend des gesamten Kippvorganges aktiviert bleibt.

3. Kippvorrichtung nach Anspruch 1, dadurch gekennzeichnet, daß der Anschlag (14) eine an der Schwinge (5) befestigte Platte ist, die von einem bügelförmig ausgebildeten, fahrerhausfesten Gegenanschlag (15) mit Spiel umgriffen ist.

4. Kippvorrichtung nach Anspruch 1, dadurch gekennzeichnet daß als Sperrzylinder (17) hydraulische Sperrzylinder vorgesehen sind, und daß deren Hydraulikkreislauf an einen Hydraulikkreislauf eines wenigstens einen Kippzylinders (9) der Kippvorrichtung angeschlossen ist.

5. Kippvorrichtung nach den Ansprüchen 1 oder 4, dadurch gekennzeichnet, daß die Sperrzylinder (17) vor oder bei Ausfahren der/des Kippzylinders (9) betätigbar sind, und daß die Sperrzylinder (17) erst in einer eingefahrenen Stellung der/des Kippzylinders (9) deaktivierbar sind.

6. Kippvorrichtung nach Anspruch 5, dadurch gekennzeichnet, daß zur Deaktivierung der Sperrzylinder (17) einer Kolbenstange (10) des wenigstens einen Kippzylinders (9) ein Stellanschlag (29) zugeordnet ist, mit dem ein auf die Sperrzylinder (17) wirkendes, hydraulisches Steuerventil (28) betätigbar ist.

7. Kippvorrichtung nach Anspruch 6, dadurch gekennzeichnet, daß der Stellanschlag (29) Bestandteil einer der Kippvorrichtung zugeordneten Fangvorrichtung (18) ist.

8. Kippvorrichtung nach einem der vorangegangenen Ansprüche,dadurch gekennzeichnet, daß die Sperrzylinder (17) mit dem Fahrerhaus (1) fest verbunden sind, und daß die Sperrzylinder (17) so angeordnet sind, daß sie mit ihren nach unten gerichteten Kolbenstangen (16) vorwiegend Kräfte in ihrer Längsrichtung übertragen.

9. Kippvorrichtung nach einem oder mehreren der vorangegangenen Ansprüche, dadurch gekennzeichnet, daß in den/die Kippzylinder (9) und in die Sperrzylinder (17) Rückschlagventile (27, 30) integriert sind.

## Claims

1. Tilt mechanism for a cab (1) of a commercial vehicle, with a blocking device (14, 16, 17) which is active while the cab (1) is being tilted and locks the suspension systems (12) supporting the cab (1), the cab (1) being slewable relative to the vehicle frame (2) by means of rockers (5) supported at one end on the vehicle frame (2) and at the other on the cab (1) and the blocking device (14, 16, 17) (5) being provided per rocker with a locking cylinder (17) whose piston rod (16) can, in order to put the blocking device (14, 16, 17) into action, be brought into non-positive contact with a stop (14) on the rocker (5), characterised in that the blocking device (14, 15, 16, 17) features a counter-stop (15) firmly attached to the cab, which counter-stop (15), when said blocking device (14, 15, 16, 17) goes into action, can, owing to the extended piston rod (16) of the locking cylinder (17) - for purposes of a defined locking of the cab (1) and the rockers (5) -, be brought into a defined, quasi-rigid and non-positive contact with the stop (14) provided on the rocker (5).

2. Tilt mechanism according to Claim 1, characterised in that the blocking device (14, 15, 16, 17) remains activated during the entire tilting operation.

3. Tilt mechanism according to Claim 1, characterised in that the stop (14) is a plate attached to the rocker (5) and is embraced with play by a bow-shaped counter-stop (15) firmly attached to the cab.

4. Tilt mechanism according to Claim 1, characterised in that hydraulic locking cylinders are provided as locking cylinders (17) and that their hydraulic circuit is connected up to a hydraulic circuit of at least the one tilt cylinder (9) of the tilt mechanism.

5. Tilt mechanism according to Claim 1 or 4, characterised in that the locking cylinders (17) can be actuated prior to or during extension of the tilt cylinder(s) (9), and that the locking cylinders (17) can be deactivated only when the tilt cylinder(s) (9) is/are in a retracted position.

6. Tilt mechanism according to Claim 5, characterised in that for deactivating the locking cylinders (17) a setting stop (29) is allocated to a piston rod (10) of at least the one tilt cylinder (9), with which setting stop (29) a hydraulic control valve (28) acting on the locking cylinders (17) can be actuated.

7. Tilt mechanism according to Claim 6, characterised in that the setting stop (29) is part of an arrester device (18) allocated to the tilt mechanism.

8. Tilt mechanism according to one of the aforementioned Claims, characterised in that the locking cylinders (17) are firmly connected with the cab (1) and that the locking cylinders (17) are arranged in such a way that with their downward-pointing piston rods (16) they transmit mainly forces in their longitudinal direction.

9. Tilt mechanism according one or several of the aforementioned Claims, characterised in that check valves (27, 30) are integrated in the tilt cylinder(s) (9) and locking cylinders (17).

## Revendications

1. Dispositif de basculement de la cabine de conduite (1) d'un véhicule utilitaire, dans lequel
• un dispositif de blocage (14, 16, 17), actif pendant le basculement de la cabine (1), immobilise les systèmes élastiques (12) soutenant la cabine en position de service,
• la cabine de conduite (1) peut basculer par rapport au châssis (2) du véhicule par l'intermédiaire de bielles (5) reliées par une extrémité au châssis (2) et par l'autre à la cabine (1),
• le dispositif de blocage (14, 16, 17) de chaque bielle (5) comporte un cylindre de blocage (17) dont la tige de piston (16), pour activer le dispositif de blocage (14, 16, 17), peut être amené en appui à force sur une butée (14) portée par la bielle (5),
caractérisé en ce que
le dispositif de blocage (14, 15, 16, 17) comprend une contreportée (15) solidaire de la cabine (1) qui, lorsque le dispositif est activé par la sortie de la tige de piston (16) du vérin de blocage (17) peut être, afin de réaliser un verrouillage défini entre la cabine (1) et les bielles (5), relié à la butée (14) située sur la bielle (5) par une liaison définie, quasi rigide et à force.

2. Dispositif selon la revendication 1,
caractérisé en ce que
le dispositif de blocage (14, 15, 16, 17) reste activé pendant tout le processus de basculement.

3. Dispositif selon la revendication 1,
caractérisé en ce que
la butée (14) est une plaque fixée à la bielle (5) et qui est en prise par l'extérieur, avec un certain jeu, sur une contreportée (15) solidaire de la cabine et de forme recourbée.

4. Dispositif selon la revendication 1,
caractérisé en ce qu'
il est prévu des vérins d'arrêt (17) de type hydraulique dont les circuits sont raccordés à un circuit hydraulique. d'au moins un vérin de basculement (9) du dispositif.

5. Dispositif selon l'une des revendications 1 à 4,
caractérisé en ce que
les vérins de blocage (17) peuvent être activés avant ou pendant la sortie des vérins de basculement (9) et ne peuvent être désactivés qu'une fois le/les vérin(s) de basculement revenu(s) en position rentrée.

6. Dispositif selon la revendication 5,
caractérisé en ce que
pour désactiver le vérin de blocage (17), à la tige de piston (10) d'au moins un vérin de basculement (9) une butée de position (29) est associée qui peut actionner une soupape hydraulique de commande (28) du vérin de blocage (17).

7. Dispositif selon la revendication 6,
caractérisé en ce que
la butée de position (29) est un élément d'un dispositif d'accrochage (18) associé au dispositif de basculement.

8. Dispositif selon l'une quelconque des revendications précédentes,
caractérisé en ce que
les vérins de blocage (17) sont solidaires de la cabine de conduite (1) et sont disposés de manière à transmettre par leurs tiges de piston (16) dirigées vers le bas essentiellement des forces orientées selon la direction longitudinale des vérins.

9. Dispositif selon une ou plusieurs des revendications précédentes,
caractérisé en ce que
des soupapes antiretour sont intégrées au(x) vérin(s) de basculement (9) et au(x) vérin(s) de blocage.
